# EUROPEAN PATENT APPLICATION

(11) **EP 4 838 893 A1**
(43) Date of publication of application: **11.11.2026**
(21) Application number: 24915746.2
(22) Date of filing: 05.01.2024
(51) Int. Cl.: H04N 21/422, H04N 21/436, H04N 21/4363, H04N 21/81, H04N 21/431

(54) **IMAGE DISPLAY DEVICE**

(71) Applicant: LG Electronics Inc., Yeongdeungpo-gu Seoul 07336 (KR)
(72) Inventor: SEOL, Seongwoon, Seoul 06772 (KR); LEE, Kyungryun, Seoul 06772 (KR); AHN, Sangjin, Seoul 06772 (KR)
(74) Representative: Vossius & Partner Patentanwälte Rechtsanwälte mbB
(86) International application number: PCT/KR2024/000301
(87) International publication number: WO 2025/146854

(57) **Abstract**

The present disclosure relates to an image display device. The image display device according to an embodiment of the present disclosure includes: a display; an external device interface communicatively connected to an external device that provides an image signal; a network interface communicatively connected to a network; a user input interface configured to communicate with a remote controller; a memory configured to store predetermined data about a command used by the external device, the command corresponding to an input received from the remote controller; and a controller, wherein the controller is configured to determine, from among the predetermined data, data used to process the input received from the remote controller based on whether a predetermined application is executed in the external device, configured to generate the command corresponding to the input received from the remote controller based on the determined data, and configured to transmit a signal including the command to the external device.

## Description

### [Technical Field]

The present disclosure relates to an image display device.

### [Background Art]

An image display device is a device having a function of displaying an image viewable by a user. Examples of the image display device may include a television (TV), a monitor, a notebook computer, and the like including a liquid crystal display (LCD) using liquid crystals or an organic light emitting diode (OLED) display using OLEDs.

Recently, digital TV services using wired or wireless communication networks are widely used. The digital TV services provide various services that typical analog broadcast services cannot provide. For example, as one type of the digital TV services, Internet Protocol Television (IPTV) and smart TV services offer interactivity that allows users to actively select the types of viewing programs, viewing times, etc. Based on this interactivity, IPTV and smart TV services can also provide various additional services, such as Internet search, home shopping, online games, etc.

Meanwhile, IPTV services and the like are generally supported by connecting an external device, such as a set-top box and the like, to the image display device. Conventionally, the external device is controlled using a separate remote controller dedicated to the external device, thereby causing inconvenience in that in order to control both the image display device and the external device, a user needs to operate each of a plurality of remote controllers separately. In addition, there is also inconvenience in that when using various external devices, a user needs remote controllers dedicated to each of the external devices.

In order to resolve these inconveniences, active research is being conducted on a method of controlling both an image display device and a connected external device using a single integrated remote control, so that users can control the image display device and the external device more conveniently.

### [Disclosure of invention]

### [Technical Problem]

It is an objective of the present disclosure to solve the above and other problems.

It is another objective of the present disclosure to provide an image display device capable of transmitting, to an external device, a command corresponding to a button not provided on a remote controller dedicated to the external device.

It is yet another objective of the present disclosure to provide an image display device capable of transmitting, to an external device, a command corresponding to an application executed in the external device.

It is still another objective of the present disclosure to provide an image display device capable of optimizing data, stored in an integrated remote controller to control an external device, based on an application executed in the external device.

It is yet another objective of the present disclosure to provide an image display device capable of optimizing a user interface (UI), displayed on a screen, based on an application executed in an external device.

### [Solution to Problem]

In accordance with an aspect of the present disclosure, the above and other objectives can be accomplished by providing an image display device including: a display; an external device interface communicatively connected to an external device that provides an image signal; a network interface communicatively connected to a network; a user input interface configured to communicate with a remote controller; a memory configured to store predetermined data about a command used by the external device, the command corresponding to an input received from the remote controller; and a controller, wherein the controller is configured to determine, from among the predetermined data, data used to process the input received from the remote controller based on whether a predetermined application is executed in the external device, configured to generate the command corresponding to the input received from the remote controller based on the determined data, and configured to transmit a signal including the command to the external device.

### [Advantageous Effects of Disclosure]

An image display device according to the present disclosure has the following effects.

According to at least one embodiment of the present disclosure, a command corresponding to a button not provided on a remote controller dedicated to an external device may be transmitted to the external device.

In addition, according to at least one embodiment of the present disclosure, a command corresponding to an application executed in an external device may be transmitted to the external device.

In addition, according to at least one embodiment of the present disclosure, data stored in an integrated remote controller to control an external device may be optimized based on an application executed in the external device.

In addition, according to at least one embodiment of the present disclosure, a user interface (UI) displayed on a screen may be optimized based on an application executed in an external device.

Further scope of applicability of the present disclosure will become apparent from the detailed description given hereinafter. However, it should be understood that the detailed description and specific examples, while indicating preferred embodiments of the present disclosure, are given by illustration only, since various changes and modifications within the idea and scope of the present disclosure will become apparent to those skilled in the art from this detailed description.

### [Brief Description of Drawings]

FIG. 1 is a diagram illustrating an image display system according to various embodiments of the present disclosure.
FIG. 2 is an internal block diagram of an image display device of FIG. 1.
FIG. 3 is an internal block diagram of a controller of FIG. 2.
FIG. 4A is a diagram illustrating a method of controlling a remote controller of FIG. 2, and FIG. 4B is an exemplary internal block diagram of the remote controller of FIG. 2.
FIG. 5 is a diagram referred to in the description of a first server of FIG. 1.
FIG. 6 is a block diagram illustrating the configuration of a first server according to an embodiment of the present disclosure.
FIG. 7 is a diagram illustrating an example of converting a speech signal into a power spectrum according to an embodiment of the present disclosure.
FIG. 8 is a block diagram illustrating the configuration of a controller for speech recognition and synthesis of an image display device according to an embodiment of the present disclosure.
FIG. 9 is a flowchart illustrating a method of operating an image display device according to an embodiment of the present disclosure.
FIGS. 10 to 14 are diagrams referred to in the description of operation of an image display device according to an embodiment of the present disclosure.

### [Mode of Disclosure]

Hereinafter, the present disclosure will be described in detail with reference to the accompanying drawings. In order to clearly and briefly describe the present disclosure, components that are irrelevant to the description will be omitted in the drawings, and the same reference numerals are used throughout the drawings to designate the same or similar components.

The suffixes, such as "module" and "unit," for elements used in the following description are given simply in view of the ease of the description, and do not have a distinguishing meaning or role. Therefore, the "module" and "unit" may be used interchangeably.

It should be understood that the terms "comprise," "include," "have," etc. when used in this specification, specify the presence of stated features, integers, steps, operations, elements, components, or combinations thereof but do not preclude the presence or addition of one or more other features, integers, steps, operations, elements, components, or combinations thereof.

It will be understood that, although the terms first, second, etc., may be used herein to describe various elements, these elements should not be limited by these terms. These terms are only used to distinguish one element from another.

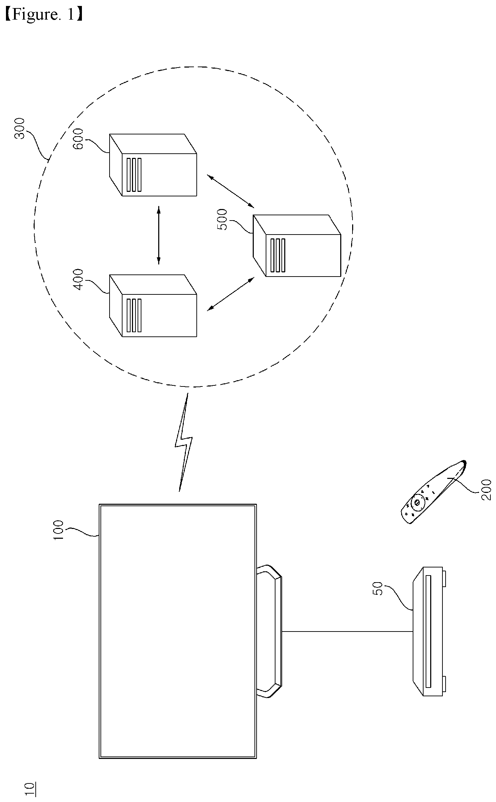

FIG. 1 is a diagram illustrating an image display system according to an embodiment of the present disclosure.

Referring to FIG. 1, an image display system 10 includes an image display device 100 and/or a remote controller 200.

The image display device 100 may be a device for processing and outputting an image. The image display device 100 may be a TV, a notebook computer, a monitor, etc., and is not particularly limited as long as it can output a screen corresponding to an image signal.

The image display device 100 may receive a broadcast signal and process the received signal, and may output a signal-processed broadcast image. Upon receiving the broadcast signal, the image display device 100 may serve as a broadcast reception device.

The image display device 100 may receive the broadcast signal wirelessly through an antenna or by wire via a cable. For example, the image display device 100 may receive a terrestrial broadcast signal, a satellite broadcast signal, a cable broadcast signal, an Internet Protocol TV (IPTV) broadcast signal, etc.

The image display device 100 may communicate with an external device 50. The image display device 100 and the external device 50 may transmit and receive signals including data with each other. For example, the external device 50 may transmit an image signal to the image display device 100. The external device 50 may include a set-top box, a dongle corresponding to a set-top box, an Over-The-Top (OTT) device providing OTT services, a Blu-ray player, a DVD player, a game console, a soundbar, a smartphone, a PC, a USB memory stick, a home theater, etc.

According to an embodiment, the image display device 100 may be connected to the external device 50 in a wired manner. For example, the image display device 100 may be connected to the external device 50 using a cable connected to a High Definition Multimedia Interface (HDMI) terminal. In this case, the image display device 100 may transmit a command to the external device 50 based on the HDMI-Consumer Electronics Control (CEC) method. In the CEC method, direction issues representing coincidence of direction between the remote controller 200 and the image display device 100 do not occur and various functions are provided through the HDMI-CEC function.

According to an embodiment, the image display device 100 may be connected to the external device 50 using a local network. For example, the image display device 100 and the external device 50 may connect to a local network provided by an access point (AP) using Wi-Fi. In this case, the image display device 100 may transmit a command to the external device 50 based on the Internet Protocol (IP) method. In the IP method, direction issues do not occur, and a wide control range may be provided.

The remote controller 200 may be connected wirelessly and/or by wire to the image display device 100 to provide various control signals to the image display device 100. In this case, the remote controller 200 may include a device for establishing a wired/wireless network with the image display device 100 and for transmitting various control signals to the image display device 100 or for receiving, from the image display device 100, signals related to various operations processed by the image display device 100, through the established network.

For example, various input devices, such as a mouse, a keyboard, a pointing device, a trackball, a joystick, etc., may be used as the remote controller 200. The remote controller 200 may be referred to as an external device, and the external device and the remote controller will be used interchangeably as needed hereinafter.

The image display device 100 may be connected to only a single remote controller 200 or may be simultaneously connected to two or more remote controllers 200, and may change an object displayed on a screen or adjust a screen state based on control signals provided by the respective remote controllers 200.

The remote controller 200 may provide various control signals to the external device 50. The remote controller 200 may wirelessly transmit signals to the external device 50 using the InfraRed (IR) method. The remote controller 200 may be referred to as an integrated remote control.

The image display system 10 may further include at least one server 300. The image display device 100 may transmit and receive data with the at least one server 300. For example, the image display device 100 may transmit and receive data with the server 300 via a network such as the Internet.

According to an embodiment, the at least one server 300 may include a first server 400 configured to perform speech recognition, a second server 500 configured to process data using a super-giant artificial intelligence model (hereinafter referred to as a super-giant AI), a third server 600 configured to provide content, etc.

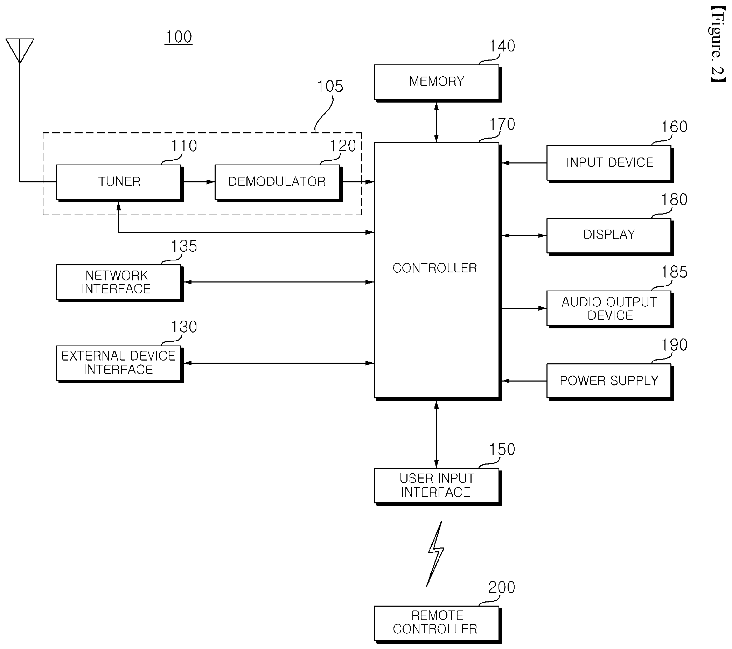

FIG. 2 is an internal block diagram of an image display device of FIG. 1.

Referring to FIG. 2, the image display device 100 may include a broadcast receiver 105, an external device interface 130, a network interface 135, a memory 140, a user input interface 150, an input device 160, a controller 170, a display 180, an audio output device 185, and/or a power supply 190.

The broadcast receiver 105 may include a tuner 110 and a demodulator 120.

Meanwhile, unlike the drawing, the image display device 100 may include only the broadcast receiver 105 and the external device interface 130, among the broadcast receiver 105, the external device interface 130, and the network interface 135. That is, the image display device 100 may not include the network interface 135.

The tuner 110 may select a broadcast signal corresponding to a channel selected by a user or broadcast signals corresponding to all prestored channels from among broadcast signals received via an antenna (not shown) or a cable (not shown). The tuner 110 may convert a selected broadcast signal into an intermediate frequency (IF) signal or a baseband video or audio signal.

For example, if the selected broadcast signal is a digital broadcast signal, the tuner 110 may convert the selected broadcast signal into a digital IF signal (DIF), and if the selected broadcast signal is an analog broadcast signal, the tuner 100 may convert the selected broadcast signal into an analog baseband video or audio signal CVBS/SIF. That is, the tuner 110 may process digital broadcast signals or analog broadcast signals. The analog baseband video or audio signal CVBS/SIF output from the tuner 110 may be directly input to the controller 170.

Meanwhile, the tuner 110 may sequentially select broadcast signals of all the broadcast channels stored through a channel memory function from among the received broadcast signals and may convert the selected broadcast signals into intermediate frequency (IF) signals or baseband video or audio signals.

Meanwhile, the tuner 110 may include a plurality of tuners for receiving broadcast signals of a plurality of channels. Alternatively, the tuner 110 may be a single tuner that simultaneously receives broadcast signals of a plurality of channels.

The demodulator 120 may receive a digital IF signal DIF converted by the tuner 110 and may demodulate the digital IF signal.

Upon performing demodulation and channel decoding, the demodulator 120 may output a stream signal TS. In this case, the stream signal may be a multiplexed video signal, audio signal or data signal.

The stream signal output from the demodulator 120 may be input to the controller 170. Upon performing demultiplexing, video/audio signal processing, etc., the controller 170 may output an image to the display 180 and may output sound to the audio output device 185.

The external device interface 130 may transmit or receive data to or from a connected external device. To this end, the external device interface 130 may include an A/V input/output unit (not shown).

The external device interface 130 may be connected by wire/wirelessly to external devices, such as a digital versatile disc (DVD) player, a Blu-ray player, a game console, a camera, a camcorder, a computer (laptop), a set-top box, etc., and may perform input/output operations for external devices.

In addition, the external device interface 130 may establish a communication network with various remote controllers 200 as illustrated in FIG. 1, and may receive control signals related to operation of the image display device 100 from the remote controller 200 or may transmit data related to operation of the image display device 100 to the remote controller 200, through the established communication network.

The A/V input/output unit may receive video and audio signals of an external device. For example, the A/V input/output unit may include an Ethernet terminal, a USB port, a composite video banking sync (CVBS) terminal, a component terminal, an S-video terminal (analog), a digital visual interface (DVI) terminal, a high definition multimedia interface (HDMI) terminal, a mobile high-definition link (MHL) terminal, an RGB terminal, a D-SUB terminal, an IEEE 1394 terminal, an SPDIF terminal, a liquid HD terminal, etc. A digital signal input through such terminals may be transmitted to the controller 170. In this case, an analogue signal input through the CVBS terminal and the S-video terminal may be converted into a digital signal by an analogue/digital conversion unit (not shown), and then may be transmitted to the controller 170.

The external device interface 130 may include a wireless communication unit (not shown) for short-range wireless communication with other electronic devices. The external device interface 130 may exchange data with an adjacent mobile terminal through the wireless communication unit. For example, in a mirroring mode, the external device interface 130 may receive device information, running application information, application image, and the like from the mobile terminal.

The external device interface 130 may perform short-range wireless communication using Bluetooth, Radio Frequency Identification (RFID), infrared Data Association (IrDA), Ultra-Wideband (UWB), ZigBee, and the like.

The network interface 135 may provide an interface for connecting the image display device 100 to a wired/wireless network including an Internet network.

The network interface 135 may include a communication module (not shown) for connection with the wired/wireless network. For example, the network interface 135 may include a communication module for Wireless LAN (WLAN), Wi-Fi, Wireless broadband (Wibro), World Interoperability for Microwave Access (Wimax), High Speed Downlink Packet Access (HSDPA), etc.

The network interface 135 may transmit or receive data to or from other users or other electronic devices through a connected network or another network linked to the connected network.

The network interface 135 may receive web content or data provided by a content provider or a network operator. That is, the network interface 135 may receive the web content or data, such as movies, advertisements, games, VOD, broadcast signals, etc., as well as information related thereto, which are provided by content providers or network providers through the network.

The network interface 135 may receive update information and an update file of firmware which are provided by network operators, and may transmit data to internet or content providers or network operators.

The network interface 135 may select a desired application from among a plurality of applications open to the public, and may receive the selected application through a network.

The memory 140 may store programs for processing and controlling each signal within the controller 170, and may store signal-processed image, audio or data signals. For example, the memory 140 may store applications designed to perform various operations which may be processed by the controller 170, and in response to a request from the controller 170, the memory 140 may selectively provide some of the stored applications.

The programs and the like stored in the memory 140 are not particularly limited, as long as the programs may be executed by the controller 170.

The memory 140 may also perform the function of temporarily storing image, audio or data signals received from an external device through the external device interface 130.

The memory 140 may store information on predetermined broadcast channels through a channel memory function, such as channel map and the like.

While FIG. 2 illustrates an example in which the memory 140 is provided separately from the controller 170, the scope of the present disclosure is not limited thereto, and the memory 140 may be included in the controller 170.

The memory 140 may include at least one of a volatile memory (e.g., DRAM, SRAM, SDRAM, etc.) and a non-volatile memory (e.g., flash memory, hard disk drive (HDD), solid-state drive (SSD), etc.). In various embodiments of the present disclosure, the memory 140 and the memory may be used interchangeably.

The user input interface 150 may transmit a signal, input by a user, to the controller 170 or may transmit a signal, input from the controller 170, to a user.

For example, the user input interface 150 may transmit/receive a user input signal, such as power on/off, channel selection, screen setup, etc., to/from the remote controller 200, and may transmit a user input signal input through a local key (not shown), such as a power key, a channel key, a volume key, or a setup value, etc., to the controller 170, or may transmit a user input signal, input from a sensor unit (not shown), which senses a user's gesture, to the controller 170, or may transmit a signal from the controller 170 to the sensor unit.

The input device 160 may be provided on one side of a main body of the image display device 100. For example, the input device 160 may include a touchpad, a physical button, etc.

The input device 160 may receive various user commands associated with the operation of the image display device 100, and may transmit a control signal corresponding to the input command to the controller 170.

The input device 160 may include at least one microphone (not shown), and may receive a user's speech through the microphone.

The controller 170 may include at least one processor, and by using the included processor, the controller 170 may control the overall operation of the image display device 100. Here, the processor may be a general processor such as a central processing unit (CPU). Obviously, the processor may be a dedicated device, such as an ASIC, or other hardware-based processor.

The controller 170 may demultiplex the stream signal received from the tuner 110, the demodulator 120, the external device interface 130, or the network interface 135, or may process the demultiplexed signals to generate and output signals for outputting video or audio.

The display 180 may convert an image signal, a data signal, an OSD signal, and a control signal processed by the controller 170 or an image signal, a data signal and a control signal received from the external device interface 130 to generate diving signals.

The display 180 may include a display panel (not shown) including a plurality of pixels.

The plurality of pixels included in the display panel may have RGB sub-pixels. Alternatively, the plurality of pixels included in the display panel may have RGBW sub-pixels. The display 180 may convert the video signal, data signal, OSD signal, control signal, and the like processed by the controller 170 to generate signals for driving the plurality of pixels.

The display 180 may be a Plasma Display Panel (PDP), a Liquid Crystal Display (LCD), an Organic Light Emitting Diode (OLED), a flexible display, etc., and may also be a three-dimensional (3D) display. The 3D display 180 may be divided into an autostereoscopic display and a glasses-type display.

Further, the display 180 may be configured as a touchscreen to be used as an input device in addition to an output device.

The audio output device 185 may receive an audio signal processed by the controller 170, and outputs the audio signal in the form of sound.

The image signal processed by the controller 170 may be input to the display 180 to be displayed as an image corresponding to the image signal. Further, the image signal processed by the controller 170 may also be input to an external output device through the external device interface 130.

The audio signal processed by the controller 170 may be output in the form of sound to the audio output device 185. Further, the audio signal processed by the controller 170 may be input to an external output device through the external device interface 130.

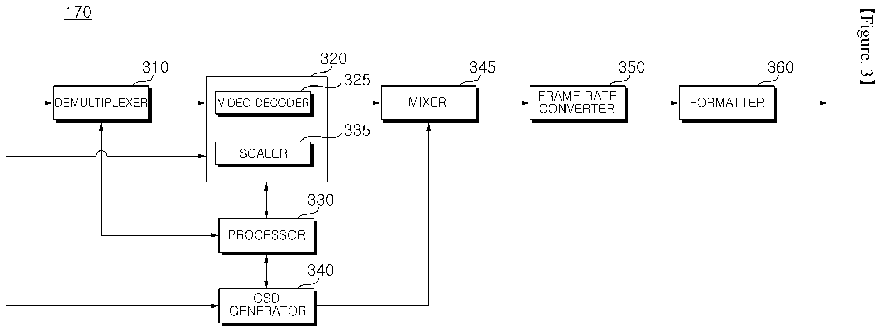

Although not illustrated in FIG. 2, the controller 170 may include a demultiplexer, an image processor, etc., which will be described later with reference to FIG. 3.

Besides, the controller 170 may control the overall operation of the image display device 100. For example, the controller 170 may control the tuner 110 to tune into a broadcast channel selected by a user or a prestored channel.

In addition, the controller 170 may control the image display device 100 according to a user command input through the user input interface 150 or an internal program.

Meanwhile, the controller 170 may control the display 180 to display images. Here, the images displayed on the display 180 may be still images or moving images and may be 2D images or 3D images.

Meanwhile, the controller 170 may control a predetermined 2D object to be displayed in an image displayed on the display 180. For example, the object may be at least one of an accessed web screen (newspaper, magazine, etc.), an electronic program guide (EPG), various menus, a widget, an icon, a still image, a moving image, and text.

Meanwhile, the image display device 100 may further include a photographing unit (not shown). The photographing unit may photograph a user. The photographing unit may be implemented with one camera, but is not limited thereto, and may be implemented with a plurality of cameras. Further, the photographing unit may be embedded in the image display device 100 at an upper portion of the display 180 or may be separately disposed. Image information photographed by the photographing unit may be input to the controller 170.

The controller 170 may determine a user's position, based on the image photographed by the photographing unit. For example, the controller 170 may determine a distance (z-axis coordinate) between the user and the image display device 100. In addition, the controller 170 may identify x-axis coordinates and y-axis coordinates in the display 180 corresponding to the user's position.

The controller 170 may detect a user's gesture based on the image photographed by the photographing unit, each of signals detected by the sensor unit, or a combination thereof.

The power supply 190 may supply power throughout the image display device 100. Particularly, the power supply 190 may supply power to the controller 170 implemented in the form of a system on chip (SOC), the display 180 for image display, the audio output device 185 for audio output, etc.

Specifically, the power supply 190 may include a converter (not shown) for converting AC power into DC power, and a DC/DC converter (not shown) for changing a DC power level.

The remote controller 200 transmits a user input to the user input interface 150. To this end, the remote controller 200 may use Bluetooth, radio frequency (RF) communication, infrared (IR) communication, Ultra Wideband (UWB), ZigBee, etc. Furthermore, the remote controller 200 may receive image, audio or data signals output from the user input interface 150, and may display the received signals or output the same in the form of sound through the remote controller 200.

Meanwhile, the aforementioned image display device 100 may be a fixed type or movable digital broadcast receiver capable of receiving digital broadcast.

Meanwhile, the block diagram of the image display device 100 illustrated in FIG. 2 is merely a block diagram for an embodiment of the present disclosure. Components of the block diagram may be integrated, added or omitted according to specifications of the actually implemented image display device 100.

That is, two or more components may be combined or one component may be divided into two or more components as needed. Furthermore, a function executed in each block is for description of an embodiment of the present disclosure, and a specific operation or device of each block is not intended to limit the scope of the present disclosure.

FIG. 3 is an internal block diagram of a controller of FIG. 2.

Referring to FIG. 3, the controller 170 according to an embodiment of the present disclosure may include a demultiplexer 310, an image processor 320, a processor 330, an OSD generator 340, a mixer 345, a frame rate converter 350, and/or a formatter 360. Besides, the controller 170 may further include an audio processor (not shown) and a data processor (not shown).

The demultiplexer 310 demultiplexes the input stream. For example, when an MPEG-2 TS is input, the demultiplexer 310 may demultiplex the MPEG-2 TS into video, audio, and data signals, respectively. Here, the stream signal input to the demultiplexer 310 may be a stream signal output from the tuner 110, the demodulator 120, or the external device interface 130.

The image processor 320 may perform image processing on the demultiplexed video signal. To this end, the image processor 320 may include a video decoder 325 and a scaler 335.

The video decoder 325 decodes the demultiplexed video signal, and the scaler 335 performs scaling so that the resolution of the decoded video signal may be output to the display 180.

The video decoder 325 may include a decoder of various standards. For example, a 3D image decoder for MPEG-2, H.264 decoder, a color image, and a depth image, and a decoder for a multiple view image may be provided.

The processor 330 may control the overall operation of the image display device 100 or the controller 170. For example, the processor 330 may control the tuner 110 to tune in to a broadcast channel selected by a user or a prestored channel.

In addition, the processor 330 may control the image display device 100 by a user command input through the user input interface 150 or an internal program.

Further, the processor 330 may control data transmission with the network interface 135 or the external device interface 130.

Moreover, the processor 330 may control operations of the demultiplexer 310, the image processor 320, the OSD generator 340, and the like in the controller 170.

The OSD generator 340 generates an OSD signal according to a user input or by itself. For example, based on a user input signal input through the input device 160, the OSD generator 340 may generate a signal for displaying various types of information on the screen of the display 180 in the form of a graphic or text, based on a user input signal input through the input device 160.

The generated OSD signal may include various data such as a user interface screen of the image display device 100, various menu screens, a widget, and an icon. In addition, the generated OSD signal may include a 2D object or a 3D object.

In addition, the OSD generator 340 may generate a pointer that may be displayed on the display, based on a pointing signal input from the remote controller 200.

The OSD generator 340 may include a pointing signal processing unit (not shown) for generating a pointer. The pointing signal processing unit (not shown) may be provided separately, rather than being provided in the OSD generator 240.

The mixer 345 may mix an OSD signal generated by the OSD generator 340 with a decoded image signal image-processed by the image processor 320. The mixed image signal may be supplied to the frame rate converter 350.

The frame rate converter (FRC) 350 may convert the frame rate of an input image. Meanwhile, the frame rate converter 350 may also directly output the frame rate without additional frame rate conversion.

The formatter 360 may arrange a left-eye image frame and a right-eye image frame of the 3D image subjected to frame rate conversion. Further, a synchronization signal Vsync may be output for opening the left-eye glass and the right-eye glass of the 3D viewing device (not shown).

Meanwhile, the formatter 360 may convert the format of an input image signal into an image signal to be displayed on the display 180.

In addition, the formatter 360 may change the format of a 3D image signal. For example, the formatter 360 may change the format of the 3D image signal into any one of various 3D formats such as a side by side format, a top/down format, a frame sequential format, an interlaced format, a checker box format, etc.

Meanwhile, the formatter 360 may convert a 2D image signal into a 3D image signal. For example, the formatter 360 may detect an edge or a selectable object from the 2D image signal and separate an object according to the detected edge or the selectable object as a 3D image signal to thereby generate the 3D image signal according to a 3D image generation algorithm. In this case, the generated 3D image signal may be separated into a left-eye image signal L and a right-eye image signal R and aligned as described above.

Meanwhile, although not illustrated herein, a 3D processor (not shown) for 3-dimensional (3D) effect signal processing may be further provided following the formatter 360. Such a 3D processor (not shown) may control brightness, tint and color of an image signal for 3D effect enhancement. For example, the 3D processor (not shown) may perform signal processing for making a close-range view clear and blurring a distant view. The function of the 3D processor may be integrated with the formatter 360 or the image processor 320.

Meanwhile, the audio processor (not shown) included in the controller 170 may process a demultiplexed audio signal. To this end, the audio processor (not shown) may include various decoders.

In addition, the audio processor (not shown) included in the controller 170 may control base, treble, volume, and the like.

The data processor (not shown) included in the controller 170 may process the demultiplexed data signal. For example, when the demultiplexed data signal is an encoded data signal, the encoded data signal may be decoded. The encoded data signal may be electronic program guide (EPG) information including broadcast information such as start time and finish time of a broadcast program that is broadcast through each channel.

Meanwhile, the block diagram of the controller 170 illustrated in FIG. 3 is merely a block diagram for an embodiment of the present disclosure, and components of the block diagram may be integrated, added, or omitted according to the specifications of the actually implemented controller 170.

Particularly, each of the frame rate converter 350 and the formatter 360 may be separately provided instead of being included in the controller 170, or may be provided separately as one module.

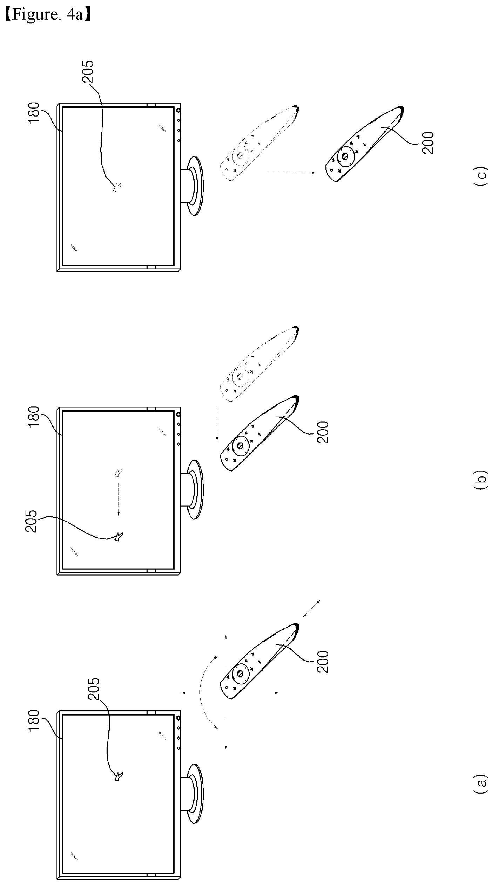

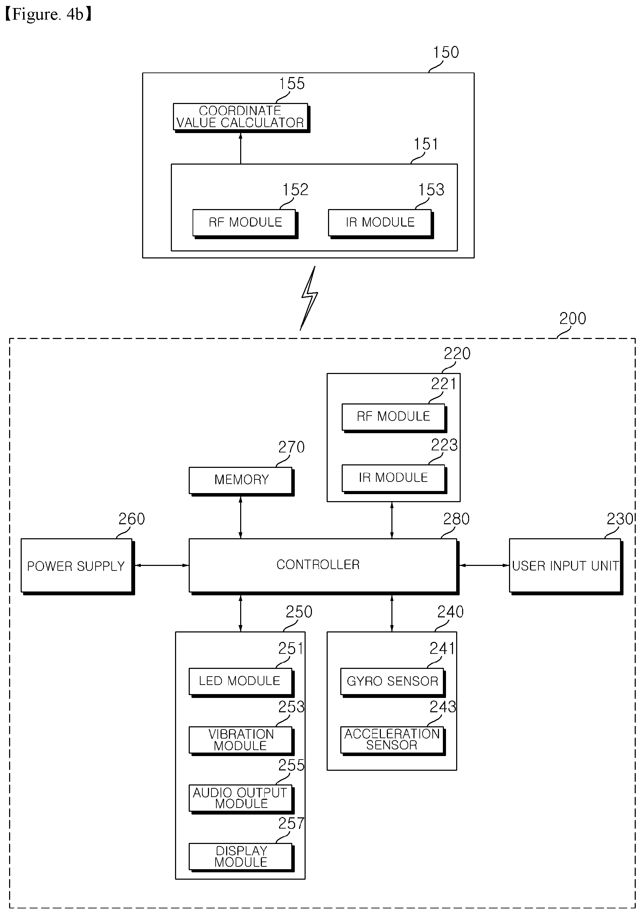

FIG. 4A is a diagram illustrating a method of controlling a remote controller of FIG. 2, and FIG. 4B is an exemplary internal block diagram of the remote controller of FIG. 2.

Referring to FIG. 4A, it can be seen that a pointer 205 corresponding to the remote controller 200 is displayed on the display 180 of the image display device 100.

Referring to (a) of FIG. 4A, a user may move or rotate the remote controller 200 up and down, left and right, and back and forth. In this case, the pointer 205 displayed on the display 180 of the image display device 100 may be displayed according to movement of the remote controller 200. The remote controller 200 may be referred to as a spatial remote controller or a 3D pointing device, because the pointer 205 corresponding thereto is moved and displayed according to movement in a 3D space, as illustrated in the drawing.

Referring to (b) of FIG. 4A, it can be seen that when the user moves the remote controller 200 to the left, the pointer 205 displayed on the display 180 of the image display device 100 also moves to the left according to the movement of the remote controller 200.

Information on movement of the remote controller 200 detected by a sensor of the remote controller 200 may be transmitted to the image display device 100. The image display device 100 may calculate coordinates of the pointer 205 based on the information on the movement of the remote controller 200. The image display device 100 may display the pointer 205 corresponding to the calculated coordinates.

Referring to (c) of FIG. 4A, a user moves the remote controller 200 away from the display 180 while pressing a specific button on the remote controller 200. Thus, a selected area on the display 180 corresponding to the pointer 205 may be zoomed in and thus magnified. On the contrary, when the user moves the remote controller 200 toward the display 180 while pressing a specific button on the remote controller 200, a selected area on the display 180 corresponding to the pointer 205 may be zoomed out and thus reduced.

Meanwhile, when the remote controller 200 moves away from the display 180, the selected area may be zoomed out, and when the remote controller 200 approaches the display 180, the selected area may be zoomed in.

Meanwhile, when a user presses a specific button of the remote controller 200, up/down movement and left/right movement may not be recognized. That is, when the remote controller 200 moves away from or closer to the display 180, up/down movement and left/right movement may not be recognized, but only the forward/backward movement may be recognized. When the user does not press the specific button of the remote controller 200, only the up/down movement and left/right movement of the remote controller 200 may be recognized, and only the pointer 205 may move accordingly.

Meanwhile, a moving speed or moving direction of the pointer 205 may correspond to a moving speed or moving direction of the remote controller 200.

Referring to FIG. 4B, the remote controller 200 may include a wireless communication unit 220, a user input unit 230, a sensor unit 240, an output unit 250, a power supply 260, a memory 270, and/or a controller 280.

The wireless communication unit 220 may transmit and receive signals to and from the image display device 100.

In this embodiment, the remote controller 200 may include an RF module 221 capable of transmitting and receiving signals to and from the image display device 100 according to radio frequency (RF) communication standards. In addition, the remote controller 200 may include an IR module 223 capable of transmitting and receiving signals to and from the image display device 100 according to Infrared radiation (IR) communication standards.

The remote controller 200 may transmit a signal including information on the movement of the remote controller 200 to the image display device 100 through the RF module 221. The remote controller 200 may receive a signal transmitted by the image display device 100 through the RF module 221.

The remote controller 200 may transmit commands related to power on/off, channel change, volume change, etc. to the image display device 100 through the IR module 223.

The user input unit 230 may include a keypad, a button, a touch pad, a touch screen, etc. A user may input a command related to the image display device 100 to the remote controller 200 by operating the user input unit 230.

If the user input unit 230 includes a hard key button, a user may input a command related to the image display device 100 to the remote controller 200 through a push operation of the hard key button.

If the user input unit 230 has a touch screen, a user may input a command related to the image display device 100 to the remote controller 200 by touching a soft key on a touch screen.

Meanwhile, the user input unit 230 may include various types of input means, such as a scroll key, a jog key, etc., which can be operated by a user, but it should be noted that this embodiment does not limit the scope of the present disclosure.

The user input unit 230 may include a microphone. A user may utter speech into the microphone provided in the user input unit 230. In this case, the microphone provided in the user input unit 230 may receive the speech uttered by the user.

The sensor unit 240 may include a gyro sensor 241 or an acceleration sensor 243. The gyro sensor 241 may sense the movement of the remote controller 200.

The gyro sensor 241 may sense information related to the operation of the remote controller 200 based on the x, y, and z axes. The acceleration sensor 243 may sense information related to the moving speed of the remote controller 200 and the like. Meanwhile, the sensor unit 240 may further include a distance measurement sensor capable of sensing the distance to the display 180.

The output unit 250 may output an image or an audio signal corresponding to an operation of the user input unit 230 or a signal transmitted from the image display device 100. Through the output unit 250, a user may recognize whether the user input unit 230 is operated or whether the image display device 100 is controlled.

The output unit 250 may include a LED module 251 including at least one light emitting element (e.g., Light Emitting Diode (LED)), a vibration module 253 that generates vibration, a sound output module 255 that outputs sound, and/or a display module 257 that outputs an image.

The power supply 260 may supply power to each component provided in the remote controller 200. The power supply 260 may include at least one battery (not shown).

When the movement of the remote controller 200 is not detected for a certain period of time through the sensor unit 240, the power supply 260 may stop supplying power to each component provided in the remote controller 200, thereby preventing unnecessary power consumption.

The power supply 260 may resume power supply to each component provided in the remote controller 200 when a predetermined event occurs. For example, the power supply 260 may resume power supply to each component when a predetermined key provided in the remote controller 200 is operated. For example, when movement of the remote controller 200 is detected through the sensor unit 240, the power supply 260 may resume power supply to each component provided in the remote controller 200.

The memory 270 may store various types of programs, application data, and the like necessary for controlling or operating the remote controller 200.

When the remote controller 200 wirelessly transmits and receives signals through the image display device 100 and the RF module 221, the remote controller 200 and the image display device 100 may transmit and receive signals through a certain frequency band. The controller 280 of the remote controller 200 may store information about a frequency band or the like for wirelessly transmitting and receiving a signal to/from the image display device 100 paired with the remote controller 200 in the storage unit 470 and may refer to the stored information.

The controller 280 may include at least one processor, and may control the overall operation of the remote controller 200 by using the processor included therein.

The controller 280 may transmit a control signal corresponding to a certain key operation of the user input unit 230 or a control signal corresponding to the movement of the remote controller 200 sensed by the sensor unit 240, to the image display device 100 through the wireless communication unit 220.

The user input interface 150 of the image display device 100 may include a wireless communication unit 151 capable of wirelessly transmitting and receiving signals with the remote controller 200, and a coordinate value calculator 155 capable of calculating the coordinate value of a pointer corresponding to the operation of the remote controller 200.

The user input interface 150 may wirelessly transmit and receive signals with the remote controller 200 through the RF module 152. In addition, the user input interface 150 may receive signals transmitted by the remote controller 200 according to IR communication standards through the IR module 153.

The coordinate value calculator 155 may calculate coordinate values (x, y) of the pointer 205 to be displayed on the display 180 by correcting hand trembling or an error based on a signal corresponding to the motion of the remote controller 200 which is received through the wireless communication unit 151.

A signal, which is transmitted from the remote controller 200 and is input to the image display device 100, is transmitted to the controller 170 of the image display device 100 through the user input interface 150. Based on the signal transmitted from the remote controller 200, the controller 170 identifies information on the motion and key manipulation of the remote controller 200, and may control the image display device 100 based on the information.

In another example, the remote controller 200 may calculate coordinate values of the pointer corresponding to the motion, and output the calculated coordinate values to the user input interface 150 of the image display device 100. In this case, the user input interface 150 of the image display device 100 may transmit information on the received coordinate values of the pointer to the controller 170 without separately correcting hand trembling or an error.

Further, in yet another example, unlike the drawing, the coordinate value calculator 155 may be included in the controller 170 rather than in the user input interface 150.

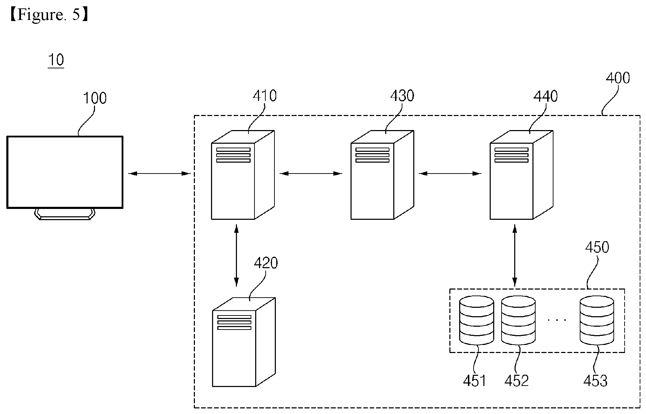

FIG. 5 is a diagram referred to in the description of a first server of FIG. 1.

Referring to FIG. 5, a first server 400 may include a relay server 410, a speech-to-text (STT) server 420, a natural language processing (NLP) server 430, an Artificial Intelligence (AI) server 440, and/or a database 450. Although the relay server 410, the STT server 420, the NLP server 430, and the AI server 440 are separated from each other in the present disclosure, the present disclosure is not limited thereto. For example, two or more of the relay server 410, the STT server 420, the NLP server 430, the AI server 440 may be configured as one server.

The relay server 410 may communicate with the image display device 100. The relay server 410 may transmit data between the STT server 420, the NLP server 430, and the image display device 100. The relay server 410 may store at least some of data transmitted between the STT server 420, the NLP server 430, and the image display device 100.

The STT server 420 may receive audio data. The STT server 420 may convert the audio data into text data. The STT server 420 may transmit the text data to the image display device 100 via the relay server 410. The STT server 420 may be referred to as an automatic speech recognition (ASR) server.

The STT server 420 may increase the accuracy of speech-to-text conversion using a language model. A language model may refer to a model that may calculate the probability of a sentence or the probability of the next word appearing when previous words are provided. For example, the language model may include probabilistic language models such as Unigram model, Bigram model, and N-gram model. That is, the STT server 420 may determine whether text data has been appropriately converted from audio data using a language model, and accordingly, increase the accuracy of conversion to text data.

The NLP server 430 may receive text data. The NLP server 430 may perform intent analysis on the text data based on the received text data. The NLP server 430 may transmit intent analysis information indicating the result of intent analysis to the image display device 100 via the relay server 410.

According to an embodiment, the NLP server 430 may generate intent analysis information by sequentially performing a morpheme analysis step, a syntax analysis step, a speech-act analysis step, a conversation processing step, and the like on text data. The morpheme analysis step is a step of classifying text data related to speech uttered by a user into morpheme units, which are the smallest units with meaning, and determining to what part of speech each classified morpheme corresponds. The syntax analysis step is a step of classifying text data into noun phrases, verb phrases, adjective phrases, and the like using the results of the morpheme analysis step and determining what kind of relationship is present between the classified phrases. Through the syntax analysis step, subjects, objects, and modifiers of speech uttered by a user may be determined. The speech-act analysis step is a step of analyzing the intention of speech uttered by a user using the results of the syntax analysis step. Specifically, the speech-act analysis step is a step of determining the intention of a sentence, such as whether a user is asking a question, making a request, or simply expressing an emotion. The conversation processing step is a step of determining whether to reply to user's utterance, respond thereto, or ask a question for additional information.

The AI server 440 may transmit a response to a request from the NLP server 430 to the relay server 410 or the NLP server 430. For example, upon receiving a search request for content from the NLP server 430, the AI server 440 may transmit, to the NLP server 430, data about at least one content corresponding to the received search request for content. For example, upon receiving a request for recommending a keyword associated with a predetermined keyword (hereinafter referred to as a related keyword) from the NLP server 430, the AI server 440 may transmit data about at least one related keyword corresponding to the predetermined keyword to the NLP server 430.

According to an embodiment, the AI server 440 may process data using a super-giant AI. For example, the AI server 440 may provide a response to a prompt received from the NLP server 430.

According to an embodiment, the AI server 440 may include a plurality of AI agent servers. Here, the plurality of AI agent servers may each respond to the type of request from the NLP server 430. For example, the AI server 440 may use a first AI agent server upon receiving a text-related request from the NLP server 430, and use a second AI agent server upon receiving a video-related request.

The database 450 may store data used to generate a response for the AI server 440. The database 450 may include a plurality of sub-databases 451 to 453. For example, the database 450 may include a first database 451 that stores text such as syllables, words, etc., a second database 452 that stores speech, a third database 453 that stores various learning models, etc.

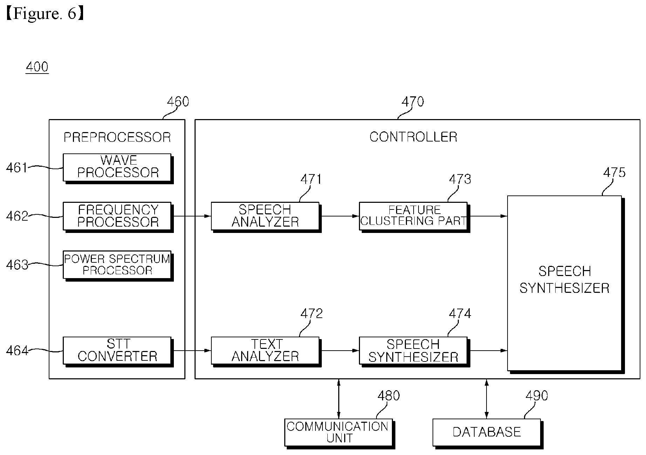

FIG. 6 is a block diagram illustrating the configuration of a first server according to an embodiment of the present disclosure.

Referring to FIG. 6, the first server 400 may include a preprocessor 460, a controller 470, a communication unit 480, and/or a database 490.

The preprocessor 460 may preprocess speech received through the communication unit 480 or speech stored in the database 490.

The preprocessor 460 may be implemented as a separate chip from the controller 470 or may be implemented as a chip included in the controller 470.

The preprocessor 460 may receive a voice signal (uttered by a user) and filter noise signals from the voice signal before converting the received voice signal into text data.

If the preprocessor 460 is provided in the image display device 100, the preprocessor 460 may recognize a wake-up word for activating speech recognition of the image display device 100. The preprocessor 460 may convert the wake-up word received through the user input interface 150 into text data, and if the converted text data is text data related to a prestored wake-up word, the preprocessor 460 may determine that the wake-up word is recognized.

The preprocessor 460 may convert the noise-removed voice signal into a power spectrum.

The power spectrum may be a parameter that indicates a frequency component included in a temporally varying waveform of a voice signal and the magnitude of the frequency component.

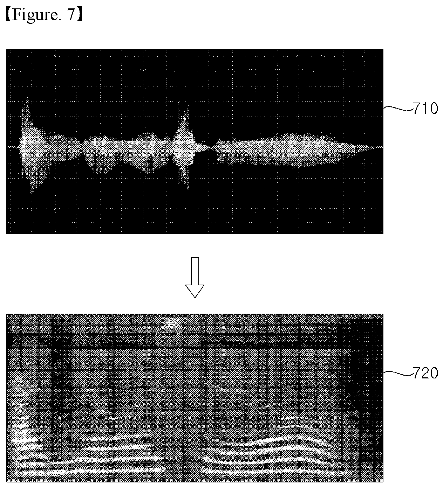

The power spectrum shows a distribution of squared amplitude values according to the frequency of the waveform of a voice signal, which will be described with reference to FIG. 7.

FIG. 7 is a diagram illustrating an example of converting a voice signal into a power spectrum according to an embodiment of the present disclosure.

FIG. 7 illustrates a voice signal 710. The voice signal 460 may be a signal received from an external device or may be a signal previously stored in the memory 170.

The x-axis of the voice signal 710 represents time, and the y-axis represents amplitude.

A power spectrum processor 463 may convert the voice signal 710 in which the x-axis is the time axis into a power spectrum 720 in which the x-axis is the frequency axis.

The power spectrum processor 463 may convert the voice signal 710 into the power spectrum 720 using Fast Fourier transform (FFT).

The x-axis of the power spectrum 720 represents frequency, and the y-axis represents the square of amplitude.

FIG. 6 will be described again.

The functions of the preprocessor 460 and the controller 470 described in FIG. 6 may also be performed in the NLP server 430.

The preprocessor 460 may include a wave processor 461, a frequency processor 462, the power spectrum processor 463, a speech-to-text (STT) converter 464, and the like.

The wave processor 461 may extract the waveform of speech.

The frequency processor 462 may extract the frequency band of the speech.

The power spectrum processor 463 may extract the power spectrum of the speech.

A power spectrum may be a parameter that indicates, when a temporally varying waveform is given, a frequency component included in the waveform and the magnitude of the frequency component.

The STT converter 464 may convert speech into text.

The STT converter 464 may convert speech in a specific language into text in that language.

The controller 470 may control the overall operation of the server 400.

The controller 470 may include a speech analyzer 471, a text analyzer 472, a feature clustering part 473, a text mapper 474, and/or a speech synthesizer 475.

The speech analyzer 471 may extract speech characteristic information using one or more of the waveform of speech, the frequency band of the speech, and the power spectrum of the speech preprocessed by the preprocessor 460.

The speech characteristic information may include one or more of information on the sex of a speaker, the voice (or tone) of the speaker, the pitch of voice, the speaking style of the speaker, the speech rate of the speaker, and the emotion of the speaker.

In addition, the speech characteristic information may further include the timbre of the speaker.

The text analyzer 472 may extract main expressions from text converted by the STT converter 464.

Upon detecting a change in tone between phrases from the converted text, the text analyzer 472 may extract the phrase with a different tone as a main expression phrase.

The text analyzer 472 may determine that the tone has changed when the frequency band between phrases has changed more than a preset band.

The text analyzer 472 may extract key words from phrases in the converted text. A key word may be a noun present in a phrase, but this is merely an example.

The feature clustering part 473 may classify the speech type of the speaker using the speech characteristic information extracted by the speech analyzer 471.

The feature clustering part 473 may classify the speech type of the speaker by assigning a weight to each type item constituting the speech characteristic information.

The feature clustering part 473 may classify the speech type of the speaker using an attention technique of a deep learning model.

The text mapper 474 may translate text, converted into a first language, into text in a second language.

The text mapper 474 may map the text translated into the second language with the text in the first language.

The text mapper 474 may map main expressions constituting the text in the first language to corresponding phrases in the second language.

The text mapper 474 may map a speech type related to the main expressions constituting the text in the first language to phrases in the second language. This is for the purpose of applying the classified speech type to the phrases in the second language.

The speech synthesizer 475 may apply the speech type and speaker's tone, classified by the feature clustering part 473, to the main expressions of the text translated into the second language in the text mapper 474 to generate synthetic speech.

The controller 470 may determine the speech characteristics of the user using one or more of the transmitted text data or the power spectrum 520.

Speech characteristics of a user may include the sex, pitch, tone, speech topic, speech rate, and voice volume of the user.

The controller 470 may obtain the frequency of the voice signal 710 and the amplitude corresponding to the frequency, by using the power spectrum 720.

The controller 470 may determine the sex of the user who has uttered the voice using the frequency band of the power spectrum 470.

For example, if the frequency band of the power spectrum 720 is within a preset first frequency band range, the controller 470 may determine that the user is male.

If the frequency band of the power spectrum 720 is within a preset second frequency band range, the controller 470 may determine that the user is female. Here, the second frequency band range may be higher than the first frequency band range.

The controller 470 may determine the pitch of voice using the frequency band of the power spectrum 720.

For example, the controller 470 may determine the pitch of the voice based on the amplitude within a specific frequency band.

The controller 470 may determine the user's tone using the frequency band of the power spectrum 720. For example, the controller 470 may determine a frequency band with an amplitude equal to or greater than a certain level among the frequency bands of the power spectrum 720 as a main sound range of the user and determine this main sound range as the user's tone.

The controller 470 may determine the user's speech rate based on the number of syllables uttered per unit time from the converted text data.

The controller 470 may determine the topic of the user's speech using the Bag-Of-Word Model technique for the converted text data.

The Bag-Of-Word Model technique is a technique of extracting frequently used words based on the frequency of a word in a sentence. Specifically, the Bag-Of-Word Model technique is a technique of extracting unique words within a sentence and expressing the frequency of each extracted word as a vector to determine the features of the topic of speech.

For example, if words such as "running" and "physical strength" appear frequently in text data, the controller 470 may classify the topic of the user's speech as exercise.

The controller 470 may determine the topic of the user's speech from the text data using a known text categorization technique. The controller 470 may extract keywords from the text data and determine the topic of the user's speech.

The controller 470 may determine the user's voice volume by considering amplitude information in the entire frequency band.

For example, the controller 470 may determine the user's voice volume based on the average or weighted average of amplitudes in each frequency band of the power spectrum.

The communication unit 480 may communicate with an external server by wire or wirelessly.

The database 490 may store speech in first language included in content.

The database 490 may store synthetic speech in which speech in the first language has been converted into speech in the second language.

The database 490 may store first text related to speech in the first language and second text in which the first text has been translated into the second language.

The database 490 may store various learning models required for speech recognition.

Meanwhile, the controller 170 of the image display device 100 illustrated in FIG. 2 may include the preprocessor 460 and the controller 470 illustrated in FIG. 6.

That is, the controller 170 of the image display device 100 may perform the functions of the preprocessor 460 and the controller 470.

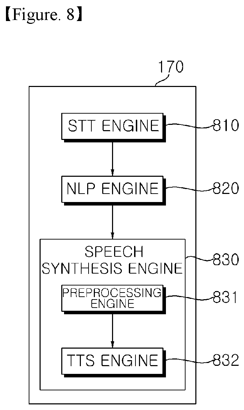

FIG. 8 is a block diagram illustrating a configuration of a controller for speech recognition and synthesis of an image display device according to an embodiment of the present disclosure.

That is, the speech recognition and synthesis process illustrated in FIG. 8 may be performed by the controller 170 of the image display device 100 without using the server.

Referring to FIG. 8, the processor 170 of the image display device 100 may include an STT engine 810, an NLP engine 820, and a speech synthesis engine 830.

Each engine may be either hardware or software.

The STT engine 810 may perform the function of the STT server 420 of FIG. 5. That is, the STT engine 810 may convert audio data into text data.

The NLP engine 820 may perform the function of the NLP server 430 shown in FIG. 5. That is, the NLP engine 820 may obtain intent analysis information indicating the speaker's intention from the converted text data.

The speech synthesis engine 830 may perform a function of a speech synthesis server.

The speech synthesis engine 830 may search a database for syllables or words related to given text data and synthesize a combination of the searched syllables or words to generate synthetic speech.

The speech synthesis engine 830 may include a preprocessing engine 831 and a TTS engine 832.

The preprocessing engine 831 may preprocess text data before generating synthetic speech.

Specifically, the preprocessing engine 831 performs tokenization to divide text data into tokens, which are meaningful units.

After performing tokenization, the preprocessing engine 831 may perform a cleansing operation to remove unnecessary characters and symbols to eliminate noise.

Thereafter, the preprocessing engine 831 may generate the same word token by integrating word tokens with different expression methods.

Thereafter, the preprocessing engine 831 may remove meaningless word tokens (stopwords).

The TTS engine 832 may synthesize speech related to the preprocessed text data and generate synthetic speech.

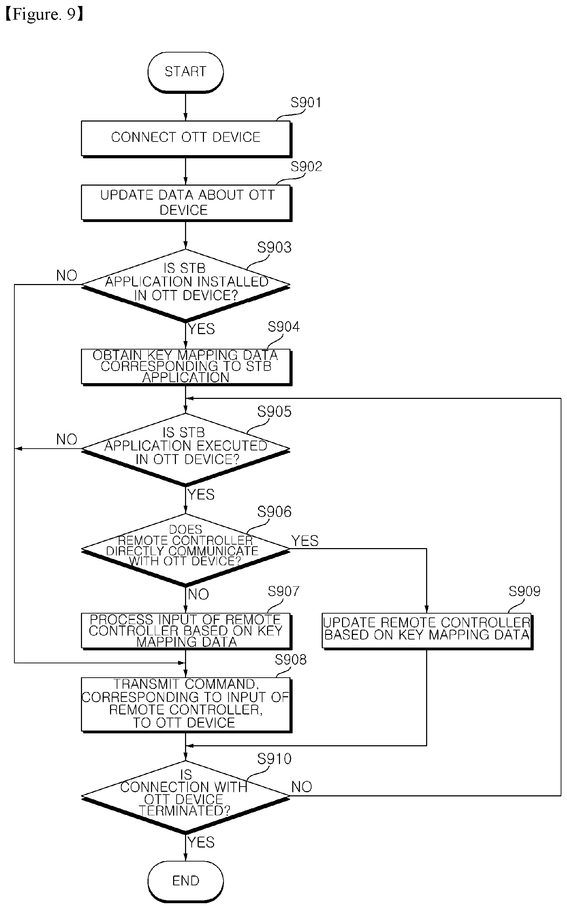

FIG. 9 is a flowchart illustrating a method of operating an image display device according to an embodiment of the present disclosure.

Referring to FIG. 9, the image display device 100 may perform communication connection with the external device 50 in operation S901. The image display device 100 may determine whether the external device 50 is of a predetermined type based on data received from the external device 50 that is communicatively connected.

For example, the image display device 100 may be communicatively connected to the external device 50 through an HDMI terminal provided in the external device interface 130. In this case, the image display device 100 may identify the external device 50, which is an OTT device, based on the data received from the external device 50 that is connected through the HDMI terminal. The present disclosure illustrates an example in which the external device 50 connected to the image display device 100 is an OTT device, but is not limited thereto.

The image display device 100 may update data about the OTT device, which is stored in the memory 140, in operation S902. Here, the data about the OTT device may include information about a control method supported by the OTT device, information about a command for controlling the OTT device, information about an application installed in the OTT device, etc.

According to an embodiment, the image display device 100 may receive the data about the OTT device from the external device 50. For example, the image display device 100 may receive the data about the OTT device from the external device 50 connected through the HDMI terminal. For example, the image display device 100 may receive the data about the OTT device from the external device 50 through a local network.

According to an embodiment, the image display device 100 may receive the data about the OTT device from the server 300. For example, the image display device 100 may transmit, to the server 300, data for identifying the external device 50 which is the OTT device. In this case, the server 30 may transmit, to the image display device 100, data about the OTT device corresponding to the data received from the image display device 100.

The image display device 100 may determine in operation S903 whether an application corresponding to a set-top box (hereinafter referred to as an STB application) is installed in the external device 50 which is the OTT device. Here, the STB application may refer to an application for providing a broadcast service. In the present disclosure, the STB application is described as an example of a specific application installed in the external device 50, but the present disclosure is not limited thereto.

If the STB application is installed in the external device 50 which is the OTT device, the image display device 100 may obtain key mapping data corresponding to the STB application in operation S904. Here, the key mapping data may refer to data associated with a command used by the external device 50 and corresponding to an input received through the user input interface 150. That is, the key mapping data may refer to data used to convert a key code, corresponding to the input received through the user input interface 150, into a command for the external device 50. The key mapping data may include a table in which a predetermined key code and a predetermined command are mapped, an algorithm for converting a predetermined key code into a predetermined command, etc. The key mapping data may vary for each external device 50.

For example, the image display device 100 may receive key mapping data corresponding to the external device 50 from the external device 50 and/or the server 300. Here, the key mapping data corresponding to the external device 50 may include basic key mapping data corresponding to the external device 50, key mapping data corresponding to an application installed in the external device 50, etc. The image display device 100 may store the received key mapping data, corresponding to the external device 50, in the memory 140. The image display device 100 may obtain the key mapping data corresponding to the STB application from the key mapping data corresponding to the external device 50 stored in the memory 140.

According to an embodiment, the basic key mapping data corresponding to the external device 50 may include a first command mapped to an input corresponding to a button provided on a remote controller dedicated to the external device 50 which is the OTT device (hereinafter referred to as a dedicated remote controller). For example, the first command may be mapped to an input corresponding to a power button, an input corresponding to a volume button, an input corresponding to a mute button, an input corresponding to an OK button, an input corresponding to a back button, etc.

Meanwhile, the key mapping data corresponding to an application may further include a second command mapped to an input used to control the application. In this case, at least a portion of the input used to control the application may not correspond to a button provided on the dedicated remote controller which is the OTT device. For example, the second command included in the key mapping data corresponding to the STB application may be mapped to an input corresponding to a channel button related to a broadcast service, an input corresponding to a numeric key button, etc.

The image display device 100 may determine in operation S905 whether the STB application is executed in the external device 500 which is the OTT device.

According to an embodiment, the image display device 100 may transmit a query about an application executed in the external device 50 at a predetermined cycle (e.g., 5 seconds). In this case, the image display device 100 may identify an application running in the foreground of the external device 50 based on a response to the query received from the external device 50.

According to an embodiment, upon receiving an input to press a predetermined button (e.g., OK button) from the integrated remote control 200, the image display device 100 may transmit the query about the application executed in the external device 50. In this case, the image display device 100 may identify the application running in the foreground of the external device 50 based on the response to the query received from the external device 50.

According to an embodiment, the image display device 100 may obtain information about a screen output through the display 180, based on an image signal received from the external device 50. Here, the information about the screen may include information about objects included in the screen, such as text, images, UI, etc. In this case, the image display device 100 may identify the application running in the foreground of the external device 50, based on the information about the screen. For example, if the screen output through the display 180 includes text corresponding to the STB application, a UI corresponding to the STB application, an image related to a broadcast service, etc., the image display device 100 may determine that the STB application runs in the foreground of the external device 50.

According to an embodiment, the image display device 100 may perform an operation associated with speech recognition on a speech input received through the integrated remote control 200 and/or the input device 160. For example, the image display device 100 may transmit the received speech input to the first server 400 that performs speech recognition, and may receive a result of the speech recognition from the first server 400. For example, the image display device 100 may perform speech recognition on the received speech input using an STT engine 810, an NLP engine 820, a speech synthesis engine 830, and the like which are included in the controller 170. In this case, the image display device 100 may identify the application running in the foreground of the external device 50, based on the result of speech recognition performed on the speech input. For example, if the speech input includes a command for executing the STB application, a command for using the STB application, a command for selecting an object corresponding to the STB application displayed on the screen, etc., the image display device 100 may determine that the STB application runs in the foreground of an external device 50.

If the STB application is executed in the external device 50 which is the OTT device, the image display device 100 may determine in operation S906 whether the integrated remote control 200 communicates directly with the external device 50 which is the OTT device.

The image display device 100 may identify a control method supported by the external device 50, based on the data about the OTT device that is stored in the memory 140. The image display device 100 may set one of control methods, supported by the external device 50, as the method of controlling the external device 50. For example, the image display device 100 may set any one of an HDMI-CEC method, an IP method, and an IR method as the method of controlling the external device 50. In this case, if the IR method is set as the method of controlling the external device 50, the image display device 100 may determine that the integrated remote control 200 communicates directly with the external device 50 which is the OTT device.

According to an embodiment, the image display device 100 may set the method of controlling the external device 50 based on predetermined priority of control methods. The present disclosure illustrates the priority of the control methods including the HDMI-CEC method set as a first priority, the IP method set as a second priority, and the IR method set as a third priority. For example, if the external device 50 supports all of the HDMI-CEC method, the IP method, and the IR method, the image display device 100 may set the HDMI-CEC method as the method of controlling the external device 50. For example, if the external device 50 supports the IP method and the IR method, the image display device 100 may set the IP method as the method of controlling the external device 50.

Meanwhile, the image display device 100 may set the method of controlling the external device 50 based on a connection state with the external device 50.

For example, when the HDMI-CEC method is set as the method of controlling the external device 50, the image display device 100 may transmit a CEC command to the external device 50. In this case, if a response to the CEC command, e.g., an Ack signal, is not received from the external device 50, the image display device 100 may change the method of controlling the external device 50 to any one of the IP method and the IR method.

For example, when the IP method is set as the method of controlling the external device 50, the image display device 100 may transmit a signal to search for the external device 50 through a local network. Alternatively, when the IP method is set as the method of controlling the external device 50, the image display device 100 may transmit a test command to the external device 50 using the IP method. In this case, if the external device 50 is not found through the local network, or if a response to the test command is not received from the external device 50, the image display device 100 may change the method of controlling the external device to the IR method.

If the integrated remote control 200 does not communicate directly with the external device 50 which is the OTT device, the image display device 100 may process an input, received from the integrated remote control 200, based on the key mapping data corresponding to the STB application in operation S907. The image display device 100 may generate a command for the external device 50 corresponding to the input received from the integrated remote control 200, based on the key mapping data corresponding to the STB application. For example, upon receiving an input that presses the power button from the integrated remote control 200, the image display device 100 may convert a key code for power into a power command for the external device 50. For example, upon receiving an input that presses a specific number among the numeric key buttons from the integrated remote control 200, the image display device 100 may convert a key code for number into a numeric command for the external device 50.

The image display device 100 may transmit a command, corresponding to the input of the integrated remote control 200, to the external device 50 which is the OTT device in operation S908. For example, if the HDMI-CEC method is set as the method of controlling the external device 50, the image display device 100 may transmit a signal, including the command corresponding to the input of the integrated remote control 200, to the integrated remote control 200 through a cable connected to the HDMI terminal using the HDMI-CEC method. For example, if the IP method is set as the method of controlling the external device 50, the image display device 100 may transmit a signal, including the command corresponding to the input of the integrated remote control 200, to the integrated remote control 200 through a local network using the IP method.

Meanwhile, if the STB application is not installed in the external device 50 which is the OTT device, or if the STB application is not executed on the external device 50 which is the OTT device, the image display device 100 may process the input received from the integrated remote control 200 based on the basic key mapping data corresponding to the external device 50.

Meanwhile, if the integrated remote control 200 communicates directly with the external device 50 which is the OTT device, the image display device 100 may update the remote controller 100 based on the key mapping data corresponding to the STB application in operation S909.

For example, if the STB application is executed in the external device 50 which is the OTT device, the image display device 100 may store, in the memory 270 of the integrated remote control 200, key mapping data corresponding to the STB application among the key mapping data corresponding to the external device 50. Upon receiving an input to press a specific button included in the input unit 230, the integrated remote control 200 may convert a key code for the specific button into a command for the external device 50 based on the key mapping data corresponding to the STB application that is stored in the memory 270. In addition, the integrated remote control 200 may transmit, to the external device 50, an IR signal including the command for the external device 50.

Meanwhile, when the integrated remote control 200 is configured to communicate directly with the external device 50 which is the OTT device, if the STB application is not installed in the external device 50 which is the OTT device, or if the STB application is not executed in the external device 50 which is the OTT device, the image display device 100 may store, in the memory 270 of the integrated remote control 200, basic key mapping data among the key mapping data corresponding to the external device 50.

The image display device 100 may determine in operation S910 whether the communication connection with the external device 50 which is the OTT device is terminated. The image display device 100 may check the application executed in the external device 50 during communication connection with the external device 50 which is the OTT device.

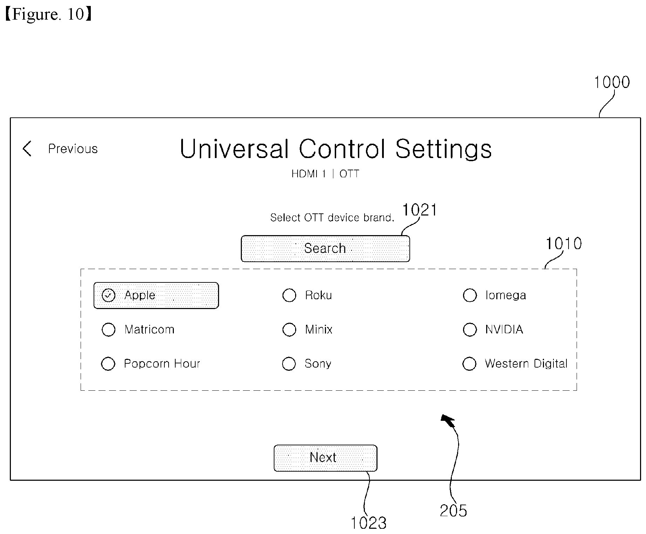

Referring to FIG. 10, the image display device 00 according to an embodiment of the present disclosure may output, through the display 180, an OTT setting screen 1000 for setting the type of the external device 50 which is the OTT device connected to the image display device 100. The OTT setting screen 1000 may include an object 1010 corresponding to various types of OTT devices, an object 1021 for searching for the type of OTT device, an object 1023 for determining the type of OTT device, etc.

If a user selects the object 1021 for searching for the type of OTT device using the pointer 205, the image display device 100 may request the server 300 to transmit data about various types of OTT devices. In this case, the image display device 100 may update the types of OTT devices based on data received from the server 300.

If a user selects one of the objects 1010 corresponding to OTT devices using the pointer 205, and then selects the object 1023 for determining the type of OTT device, the image display device 100 may determine the type of the external device 50 which is the OTT device connected to the image display device 100. In addition, the image display device 100 may update data about the OTT device stored in the memory 140, the key mapping data corresponding to the external device 50 that is stored in the memory 270 of the integrated remote control 200, etc., based on the determined type of the external device 50.

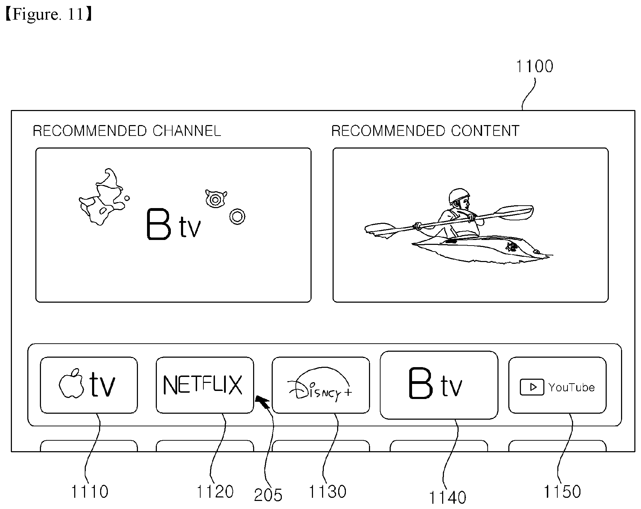

Referring to FIG. 11, the image display device 100 according to an embodiment of the present disclosure may output a home screen 1100, corresponding to the external device 50, through the display 180 based on an image signal received from the external device 50 which is the OTT device.

The home screen 1100 corresponding to the external device 50 may include objects corresponding to applications installed in the external device 50. For example, the home screen 1100 may include objects 1110 to 1130 and 1150 corresponding to applications that provide OTT services, an object 1140 corresponding to an application for providing a broadcast service, etc.

If a user selects one of the objects 1110 to 11150 corresponding to the applications installed in the external device 50 using the pointer 205, a command corresponding to the object selected by the user may be transmitted to the external device 50. In this case, the external device 50 may execute the application, corresponding to the object selected by the user, in the foreground based on a command received from the image display device 100 or the integrated remote control 200.

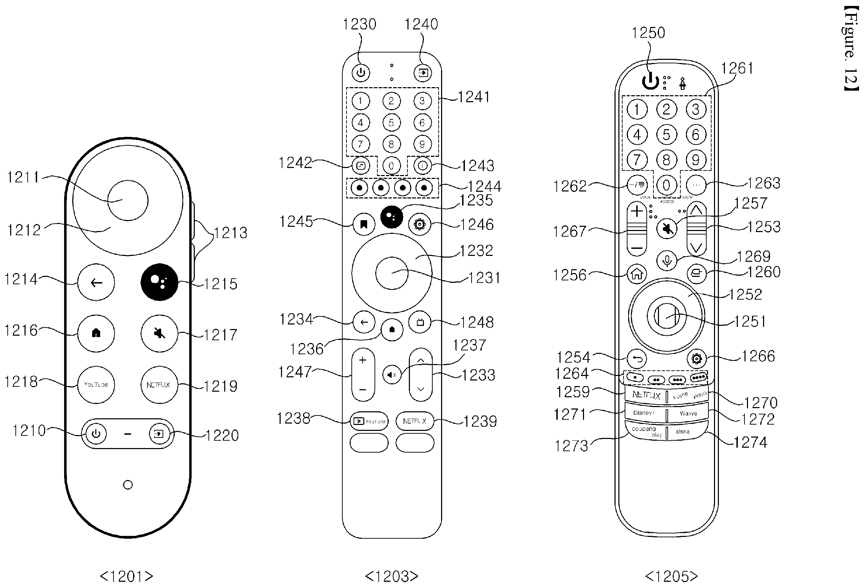

Referring to reference numeral 1201 of FIG. 12, a dedicated remote control, which is an OTT device, according to an embodiment may include a power button 1210, an OK button 1211, a direction button 1212, a volume button 1213, a back button 1214, an AI function button 1215, a home button 1216, a mute button 1217, OTT service buttons 1218 and 1219, a TV input button 1220, etc.

Referring to reference numeral 1203 of FIG. 12, a dedicated remote control, which is an OTT device, according to another embodiment may include a power button 1230, an OK button 1231, a direction button 1232, a volume button 1233, a back button 1234, AI function buttons 1235 and 1243, a home button 1236, a mute button 1237, OTT service buttons 1238 and 1239, a TV input button 1240, a numeric key button 1241, a voice input button 1242, a video control button 1244, a favorites button 1245, a settings button 1246, a channel button 1247, a broadcast schedule button 1248, etc.

That is, the buttons provided on the dedicated remote control may vary depending on the type of dedicated remote control which is the OTT device. For example, the remote control denoted by reference numeral 1201 does not include buttons corresponding to broadcast services, whereas the remote control denoted by reference numeral 1203 may include buttons corresponding to broadcast services.

Meanwhile, referring to reference numeral 1205 of FIG. 12, the integrated remote control 200 may include buttons that are not provided on the dedicated remote control. The integrated remote control 200 connected to the image display device 100 may include a power button 1250, an OK button 1251, a direction button 1252, a volume button 1253, a back button 1254, a home button 1256, a mute button 1257, OTT service buttons 1259 and 1270 to 1273, an external input button 1260, a numeric key button 1261, a channel selection/channel list button 1262, a TV function button 1263, a user-defined button 1264, a settings button 1266, a channel button 1267, a voice input button 1269, etc.

The image display device 100 according to an embodiment of the present disclosure may determine whether a specific button, which is not provided on the integrated remote control 200, is provided based on the key mapping data corresponding to the external device 50. In this case, the image display device 100 may map a predetermined button provided on the integrated remote control 200 to a specific button provided on the dedicated remote control.

For example, the image display device 100 may map the AI function buttons 1215 and 1235 provided on the dedicated remote control to a first button among the user-defined buttons 1264 provided on the integrated remote control 200, and map the specific OTT service buttons 1218 and 1238 provided on the dedicated remote control to a second button among the user-defined buttons 1264 provided on the integrated remote control 200. In this case, if the user presses the first button among the user-defined buttons 1264 provided on the integrated remote control 200, the image display device 100 or the integrated remote control 200 may transmit a signal including a command for the AI function to the external device 50.

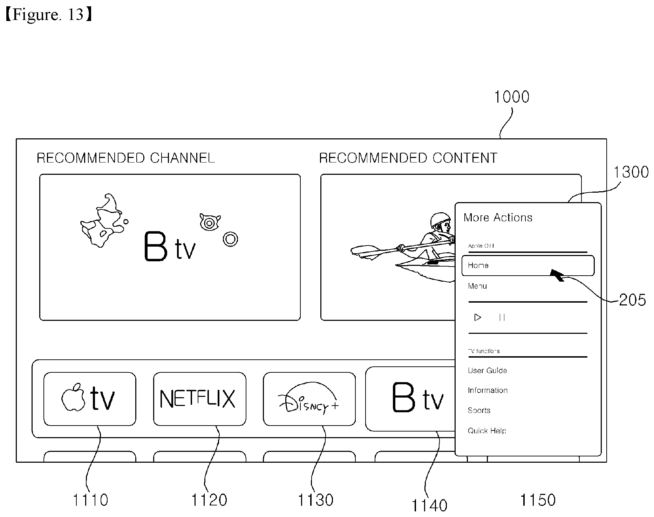

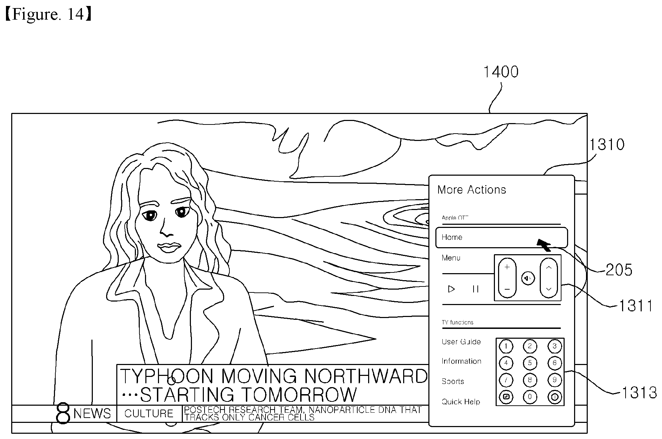

Referring to FIGS. 13 and 14, the image display device 100 according to an embodiment of the present disclosure may output virtual remote control UIs 1300 and 1310 through the display 180. Here, the virtual remote control UI may be a software component that applies an input without requiring physical keys.

The virtual remote control UIs 1300 and 1310 may be displayed together with screens 1300 and 1400 corresponding to an image signal received from the external device 50. For example, the virtual remote control UIs 1300 and 1310 may be displayed in the form of a popup for the screen corresponding to the image signal received from the external device 50.

A user may select an object corresponding to a button included in the virtual remote control UIs 1300 and 1400 using the pointer 205. In this case, the image display device 100 may transmit a command, mapped to an input corresponding to the object selected by the user, to the external device 50 based on key mapping data.

Meanwhile, the virtual remote control UIs 1300 and 1400 may correspond to an application executed in the external device 50. The virtual remote control UIs 1300 and 1400 may correspond to the key mapping data corresponding to the application executed in the external device 50.

Referring to FIG. 13, when the image display device 100 outputs the home screen 1100 corresponding to the external device 50, the image display device 100 may output a first virtual remote control UI 1300 corresponding to basic key mapping data.

Meanwhile, referring to FIG. 14, when an STB application is executed in the external device 50 such that the image display device 100 outputs a broadcast screen 1400, the image display device 100 may output a second virtual remote control UI 1310 corresponding to the key mapping data corresponding to the STB application. In this case, the second virtual remote control UI 1310 may further include not only the objects included in the first virtual remote control UI 1300, but also a first object 1311 corresponding to a channel button, a volume button, a mute button, etc., and a second object 1313 corresponding to a numeric key button, etc.

As described above, according to at least one embodiment of the present disclosure, a command corresponding to a button not provided on a remote controller dedicated to the external device 50 may be transmitted to the external device 50.

In addition, according to at least one embodiment of the present disclosure, a command corresponding to an application executed in the external device 50 may be transmitted to the external device 50.

In addition, according to at least one embodiment of the present disclosure, data stored in an integrated remote controller to control the external device 50 may be optimized based on an application executed in the external device 50.

In addition, according to at least one embodiment of the present disclosure, a user interface (UI) displayed on a screen may be optimized based on an application executed in the external device 50.

Referring to FIGS. 1 to 14, an image display device 100 according to an embodiment of the present disclosure includes: a display 180; an external device interface 130 communicatively connected to an external device 50 that provides an image signal; a network interface 135 communicatively connected to a network; a user input interface 150 configured to communicate with a remote controller 200; a memory 140 configured to store predetermined data about a command used by the external device 50, the command corresponding to an input received from the remote controller 200; and a controller 170, wherein the controller 170 is configured to determine, from among the predetermined data, data used to process the input received from the remote controller 200 based on whether a predetermined application is executed in the external device 50, configured to generate the command corresponding to the input received from the remote controller 200 based on the determined data, and configured to transmit a signal including the command to the external device 50.

In addition, according to an embodiment of the present disclosure, the predetermined application may be an application for providing a broadcast service.

In addition, according to an embodiment of the present disclosure, the external device 50 may be a device for providing an Over-The-Top (OTT) service.

In addition, according to an embodiment of the present disclosure, the controller 170 may be configured to: in response to the predetermined application not being executed in the external device 50, determine first data about a first command, mapped to an input corresponding to a button provided on another remote controller that is dedicated to the external device 50, to be the data used to process the input received from the remote controller 200; and in response to the predetermined application being executed in the external device 50, determine second data about a second command, mapped to an input used to control the predetermined application, and the first command to be the data used to process the input received from the remote controller 200.

In addition, according to an embodiment of the present disclosure, the first command may be mapped to an input corresponding to a part of a plurality of buttons provided on the remote controller 200, and the second command may be mapped to another part of the plurality of buttons provided on the remote controller 200.

In addition, according to an embodiment of the present disclosure, the controller 170 may be configured to determine whether the predetermined application is installed in the external device 50 based on data about the external device 50 received from at least one of the external device 50 and the server 300, and in response to the predetermined application being installed in the external device 50, configured to determine one of the first data and the second data to be the data used to process the input received from the remote controller 200 based on whether the predetermined application is executed in the external device 50, and in response to the predetermined application not being installed in the external device 50, configured to determine the first data to be the data used to process the input received from the remote controller 200.

In addition, according to an embodiment of the present disclosure, in response to the predetermined application not being executed in the external device 50, the controller 170 may be configured to output a first user interface (UI) corresponding to the first data through the display 180, and in response to the predetermined application being executed in the external device 50, configured to output a second UI corresponding to the second data.

In addition, according to an embodiment of the present disclosure, the first UI and the second UI may be displayed in the form of a popup for a screen corresponding to the image signal received from the external device 50.

In addition, according to an embodiment of the present disclosure, the controller 170 may be configured to transmit a query about the application executed in the external device 50 at a predetermined cycle, and configured to identify an application running in a foreground of the external device 50 based on a response to the query received from the external device 50.

In addition, according to an embodiment of the present disclosure, upon receiving an input that presses a predetermined button from the remote controller 200, the controller 170 may be configured to transmit the query.

In addition, according to an embodiment of the present disclosure, the controller 170 may be configured to obtain information about an object, included in a screen output through the display 180, based on the image signal received from the external device 50, and configured to identify the application, running in the foreground of the external device 50, based on the information about the object included in the screen.

In addition, according to an embodiment of the present disclosure, the image display device may further include a microphone, wherein the controller 170 may be configured to perform an operation associated with speech recognition on a speech input received through at least one of the remote controller 200 and the microphone, and configured to identify the application running in the foreground of the external device based on a result of the speech recognition performed on the speech input.

In addition, according to an embodiment of the present disclosure, the controller 170 may be configured to determine whether the remote controller 200 communicates directly with the external device 50 based on a control method for controlling the external device 50, and in response to the remote controller 200 communicating directly with the external device 50, configured to transmit, to the remote controller 200, the data used to process the input received from the remote controller 200, and in response to the remote controller 200 not communicating directly with the external device 50, configured to generate the command corresponding to the input received from the remote controller 200 based on the determined data.

In addition, according to an embodiment of the present disclosure, the controller 170 may be configured to identify methods supported by the external device 50 among an HDMI-Consumer Electronics Control (CEC) method, an Internet Protocol (IP) method, and an InfraRed (IR) method, configured to set one of the methods, supported by the external device 50, as the control method, and in response to one of the HDMI-CEC method and the IP method being set as the control method, configured to transmit a signal including the command to the external device 50 according to the control method.

In addition, according to an embodiment of the present disclosure, the controller 170 may be configured to set one of the methods, supported by the external device 50, as the control method based on predetermined priority of the control methods, wherein the HDMI-CEC method may have a higher priority than the IP method, and the IP method may have a higher priority than the IR method.

The accompanying drawings are used to assist in easy understanding of various technical features and it should be understood that the embodiments presented herein are not limited by the accompanying drawings. As such, the present disclosure should be construed to extend to any alterations, equivalents and substitutes falling within the idea and scope of the present disclosure.

Meanwhile, an operating method of the present disclosure can be realized as a processor-readable code written on a recording medium readable by a processor included in the audio device. The processor-readable recording medium may be any type of recording device in which data is stored in a processor-readable manner. Examples of the processor-readable recording medium include a ROM, a RAM, a CD-ROM, a magnetic tape, a floppy disc, an optical data storage, and a carrier wave, e.g., data transmission through the Internet. The processor-readable recording medium can be distributed over a plurality of computer systems connected to a network so that a processor-readable code is written thereto and executed therefrom in a decentralized manner.

While the present disclosure has been shown and described with reference to the preferred embodiments thereof, it should be understood that the present disclosure is not limited to the aforementioned specific embodiments, and various modifications and variations may be made by those skilled in the art without departing from the scope and idea of the disclosure as defined by the appended claims, and the modified implementations should not be construed independently of the technical idea or prospect of the present disclosure.

## Claims

1. An image display device comprising:
a display;
an external device interface communicatively connected to an external device that provides an image signal;
a network interface communicatively connected to a network;
a user input interface configured to communicate with a remote controller;
a memory configured to store predetermined data about a command used by the external device, the command corresponding to an input received from the remote controller; and
a controller,
wherein the controller is configured to:
determine, from among the predetermined data, data used to process the input received from the remote controller based on whether a predetermined application is executed in the external device,
generate the command corresponding to the input received from the remote controller based on the determined data, and
transmit a signal including the command to the external device.

2. The image display device of claim 1, wherein the predetermined application is an application for providing a broadcast service.

3. The image display device of claim 2, wherein the external device is a device for providing an Over-The-Top (OTT) service.

4. The image display device of claim 1, wherein the controller is configured to:
in response to the predetermined application not being executed in the external device, determine first data about a first command, mapped to an input corresponding to a button provided on another remote controller that is dedicated to the external device, to be the data used to process the input received from the remote controller; and
in response to the predetermined application being executed in the external device, determine second data about a second command, mapped to an input used to control the predetermined application, and the first command to be the data used to process the input received from the remote controller.

5. The image display device of claim 4, wherein the first command is mapped to an input corresponding to a part of a plurality of buttons provided on the remote controller, and the second command is mapped to another part of the plurality of buttons provided on the remote controller.

6. The image display device of claim 4, wherein the controller is configured to:
determine whether the predetermined application is installed in the external device based on data about the external device received from at least one of the external device and the server,
in response to the predetermined application being installed in the external device, determine one of the first data and the second data to be the data used to process the input received from the remote controller based on whether the predetermined application is executed in the external device, and
in response to the predetermined application not being installed in the external device, determine the first data to be the data used to process the input received from the remote controller.

7. The image display device of claim 4, wherein in response to the predetermined application not being executed in the external device, the controller is configured to:
output a first user interface (UI) corresponding to the first data through the display, and
in response to the predetermined application being executed in the external device, output a second UI corresponding to the second data.

8. The image display device of claim 7, wherein the first UI and the second UI are displayed in the form of a popup for a screen corresponding to the image signal received from the external device.

9. The image display device of claim 1, wherein the controller is configured to:
transmit a query about the application executed in the external device at a predetermined cycle, and
identify an application running in a foreground of the external device based on a response to the query received from the external device.

10. The image display device of claim 9, wherein upon receiving an input that presses a predetermined button from the remote controller, the controller is configured to transmit the query.

11. The image display device of claim 1, wherein the controller is configured to:
obtain information about an object, included in a screen output through the display, based on the image signal received from the external device, and
identify the application, running in the foreground of the external device, based on the information about the object included in the screen.

12. The image display device of claim 1, further comprising a microphone,
wherein the controller is configured to:
perform an operation associated with speech recognition on a speech input received through at least one of the remote controller and the microphone, and
identify the application running in the foreground of the external device based on a result of the speech recognition performed on the speech input.

13. The image display device of claim 1, wherein the controller is configured to:
determine whether the remote controller communicates directly with the external device based on a control method for controlling the external device,
in response to the remote controller communicating directly with the external device, transmit, to the remote controller, the data used to process the input received from the remote controller, and
in response to the remote controller not communicating directly with the external device, generate the command corresponding to the input received from the remote controller based on the determined data.

14. The image display device of claim 11, wherein the controller is configured to:
identify methods supported by the external device among an HDMI-Consumer Electronics Control (CEC) method, an Internet Protocol (IP) method, and an InfraRed (IR) method,
set one of the methods, supported by the external device, as the control method, and
in response to one of the HDMI-CEC method and the IP method being set as the control method, transmit a signal including the command to the external device according to the control method.

15. The image display device of claim 14, wherein the controller is configured to set one of the methods, supported by the external device, as the control method based on predetermined priority of the control methods,
wherein the priority is set such that the HDMI-CEC method has a higher priority than the IP method, and the IP method has a higher priority than the IR method.
